# FASCICULE DE BREVET EUROPEEN

(11) **EP 2 580 445 B1**
(45) Date de publication et mention de la délivrance du brevet: **29.11.2017**
(21) Numéro de dépôt: 11795247.3
(22) Date de dépôt: 07.06.2011
(51) Int. Cl.: F02B 67/06, H02K 5/10, F02B 77/00, F16H 7/24

(54) **VEHICULE AUTOMOBILE EQUIPE D'UN SYSTEME " STOP&START " PAR ALTERNO-DEMARREUR ET COMPRENANT DISPOSITIF DE PROTECTION DE LA FACADE ACCESSOIRES**
MOTORFAHRZEUG MIT EINEM GENERATOR-START- UND STOPP-SYSTEM UND EINER VORRICHTUNG ZUM SCHUTZ FREILIEGENDER FLÄCHEN VON ZUBEHÖRTEILEN
MOTOR VEHICLE FITTED WITH AN ALTERNATOR-STARTER-TYPE "STOP & START" SYSTEM AND INCLUDING DEVICE FOR PROTECTING THE EXPOSED FACE OF ACCESSORIES

(30) Priorité: 14.06.2010 FR 1054677
(43) Date de publication de la demande: 17.04.2013
(73) Titulaire: PSA Automobiles SA, 78300 Poissy (FR)
(72) Inventeur: PITAUD, Bernard, F-37170 Chambray-Les-Tours (FR)
(74) Mandataire: Laurin, Ghislain Nicolas
(86) Numéro de dépôt international: PCT/FR2011/051282
(87) Numéro de publication internationale: WO 2011/157923

(56) Documents cités:
- FR-A3- 2 895 361
- JP-A- 2007 198 138

## Description

La présente invention concerne un dispositif de protection de la façade des accessoires entraînés par le vilebrequin, dite « façade accessoires » dans la suite du texte, dans un véhicule automobile équipé d'un système « Stop & Start » par alterno-démarreur.

De nombreux véhicules automobiles sont équipés d'une fonction dite « Stop & Start », désignée aussi « STT » dans la suite du texte, ou présentent une motorisation hybride combinant un moteur électrique à un moteur thermique.

La fonction STT permet de couper automatiquement le moteur lors d'un arrêt prolongé et de le redémarrer instantanément et en silence. Cette prestation est obtenue par le moyen d'un alterno-démarreur, qui remplace le démarreur classique sans qu'il soit nécessaire de modifier l'architecture classique du moteur. Sur une motorisation hybride, l'alterno-démarreur redémarre le moteur thermique après une phase de propulsion électrique.

L'alterno-démarreur regroupe en un seul organe le démarreur et l'alternateur, une électronique de contrôle décidant s'il fonctionne en générateur ou en moteur. L'alterno-démarreur, lorsqu'il redémarre le moteur thermique du véhicule, doit entraîner, par l'intermédiaire d'une courroie, non seulement le moteur thermique mais aussi différents accessoires, tels que le système de climatisation, par exemple. Le diamètre de la poulie de l'alterno-démarreur étant deux à trois fois plus petit que le diamètre de la poulie de vilebrequin, il faut que l'adhérence entre la poulie de l'alterno-démarreur et la courroie reste forte. La présence d'eau entre la poulie de l'alterno-démarreur et la courroie a pour conséquence dommageable d'accroître le risque d'échec du redémarrage du moteur.

La courroie est tendue tantôt dans sa partie supérieure, tantôt dans sa partie inférieure, selon que la traction est effectuée par le moteur (mode alternateur) ou par l'alterno-démarreur (mode démarreur). Différentes solutions techniques existent pour permettre de gérer ces différences de tension. Ces solutions peuvent utiliser des tendeurs hydrauliques, des tendeurs mécaniques ou une courroie plus élastique. Certaines de ces solutions rendent possibles des redémarrages en ambiance humide, mais elles ont pour défaut de trop solliciter la courroie, qui est alors affaiblie, notamment dans sa durée de vie.

On a déjà cherché à protéger par des moyens enveloppants, de type carter ou capotage, des accessoires entraînés par courroie sur un véhicule automobile. Ainsi, à titre d'exemple, le document US 6 178 939 B1 décrit un système générateur d'énergie pour un véhicule automobile à moteur à combustion interne, dans lequel le moteur comporte une vanne à papillon de régulation de la quantité d'air amené à un couvercle de vanne, un collecteur d'admission pour amener l'air de la vanne à papillon au couvercle de vanne, un élément allongé creux destiné à faire passer l'air du couvercle de vanne à la vanne à papillon, une source commune de carburant pour amener du carburant au collecteur, couplée au collecteur, un radiateur destiné à refroidir le moteur, couplé au moteur, une pluralité d'accessoires entraînés par courroie, couplés au moteur et entraînés par un vilebrequin, et un boîtier destiné à diminuer le bruit du moteur et à recevoir un filtre. Le boîtier est monté sur le moteur et il inclue une cavité d'air interne, une enveloppe de protection intégrale avec l'extérieur du boîtier. Cette enveloppe de protection constitue une paroi périphérique qui définit un évidement entourant au moins partiellement au moins une partie d'au moins deux des accessoires entraînés par courroie. L'enveloppe de protection réduit sensiblement le bruit généré par le moteur.

On notera que cette enveloppe de protection décrite dans le document US 6 178 939 B1, conçue pour réduire le bruit, n'est pas conçue pour protéger les accessoires entraînés par courroie des projections d'eau ou de gravillons. Le document JP2007198138 présente par ailleurs une protection de la courroie et des poulies d'un moteur, conforme au préambule de la revendication 1.

Le but de la présente invention est de fournir un dispositif qui protège des projections d'eau ou de gravillons la façade accessoires dans un véhicule automobile équipé d'un système « Stop & Start » par alterno-démarreur, de telles projections pouvant entraîner l'échec du redémarrage du moteur par l'alterno-démarreur.

Un autre but de la présente invention est de fournir un tel dispositif de protection, qui soit de conception et de réalisation simple, qui soit économique, notamment en entraînant des modifications mineures et limitées sur les pièces existantes des véhicules, et qui soit aisément adaptable aux différents modèles de véhicules.

Pour parvenir à ces buts, la présente invention a pour objet un véhicule automobile, du type comportant :
- un système « Stop & Start » par alterno-démarreur,
- un dispositif de protection de la façade accessoires,

ledit dispositif étant constitué par un capotage de protection (10) monté, par l'intermédiaire de moyens de positionnement et de fixation, sur un support solidaire du moteur, ledit capotage de protection (10) permettant de limiter les projections d'eau ou de gravillons sur différents accessoires, tels que la courroie (1) de l'alterno-démarreur, les tendeurs et les poulies d'alternateur, de compresseur et de vilebrequin, caractérisé en ce qu'il est prévu au moins un aileron (11) sur le capotage de protection (10), qui est disposé dans la partie dudit capotage de protection (10) tournée vers l'avant du véhicule et qui fait saillie vers le haut et vers l'avant, de façon à renforcer la protection en cas de projection d'eau ou de gravillons.

Cet aileron au moins peut être « monobloc » avec le capotage de protection, ou monté sur le capotage de protection par vissage ou par clippage.

De préférence, cet aileron au moins est placé dans une rainure pouvant s'adapter à chaque véhicule.

Le support solidaire du véhicule, sur lequel est monté le capotage de protection, est avantageusement le support de compresseur.

Les moyens de positionnement et de fixation du capotage de protection sur le support comportent au moins deux points de fixation, qui sont des points de fixation par vissage.

Ces moyens de positionnement et de fixation du capotage de protection peuvent comporter, de plus, un point de fixation par un goujon du bac à huile. Ils peuvent aussi comporter, de plus, un point d'appui sur une vis du carter de distribution.

De manière préférentielle, cette vis du carter de distribution présente avantageusement une interface amortissante, de type caoutchouc par exemple, montée sur le carter de distribution.

D'autres buts, avantages et caractéristiques de l'invention apparaîtront dans la description qui suit d'exemples de réalisation, non limitatifs de l'objet et de la portée de la présente demande de brevet, accompagnée de dessins dans lesquels :
- la figure 1 est une vue en perspective, schématique, du dispositif de protection selon l'invention en place sur la façade accessoires d'un véhicule automobile équipé d'une fonction STT par alterno-démarreur, et
- la figure 2 est une vue agrandie montrant, de manière détaillée, un point d'appui du dispositif de protection de la figure 1 sur le carter de distribution du véhicule.

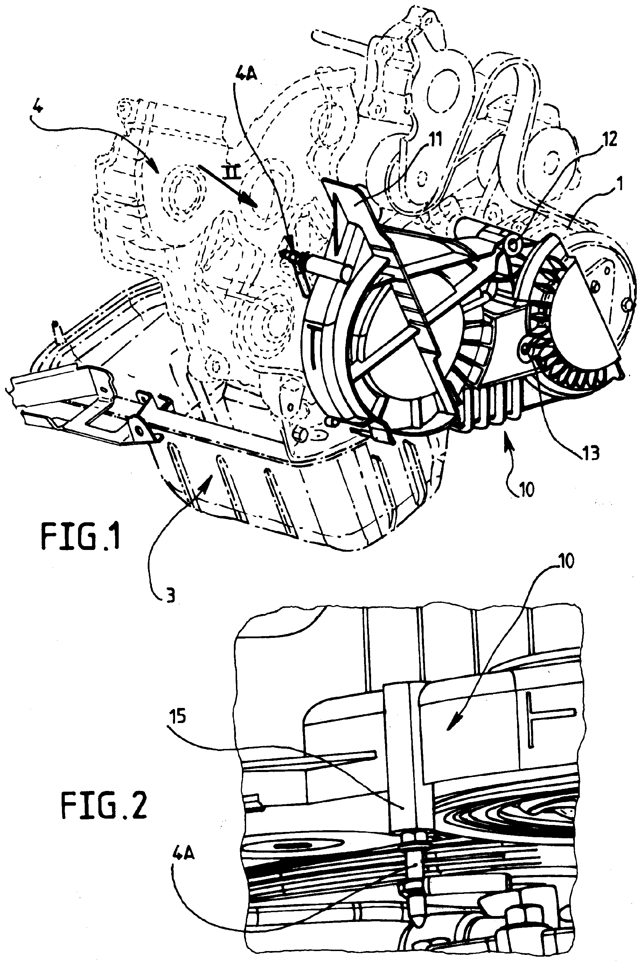

En référence au dessin de la figure 1, on a représenté un capotage de protection, de référence générale 10, qui vient protéger tout ou partie de la façade d'au moins une partie des accessoires d'un véhicule automobile équipé d'une fonction STT par alterno-démarreur. La référence 3 désigne le bac à huile du moteur du véhicule, la référence 4 désigne le carter de distribution et la référence 1 la courroie d'entraînement des accessoires qui est en partie cachée par le capotage de protection 10.

De cette manière, le capotage de protection 10 permet de limiter les projections d'eau ou de gravillons sur les différents accessoires entraînés par le moteur, tels que, notamment, la courroie 1 de l'alterno-démarreur, les tendeurs et les poulies d'alternateur, de compresseur et de vilebrequin.

Sur le capotage de protection 10, il est prévu au moins un aileron, de référence 11, qui est disposé dans la partie du capotage 10 tournée vers l'avant du véhicule et qui fait saillie vers le haut et vers l'avant, de façon à renforcer la protection en cas de projection d'eau ou de gravillons, notamment lorsque le véhicule est en situation de passage à gué ou de suivi de file de véhicules.

L'aileron 11 peut être « monobloc » avec le capotage de protection 10. En variante, il peut être monté sur le capotage de protection 10 par l'intermédiaire d'une liaison de type connu en soi, par vissage ou bien par clippage.

En variante également, l'aileron 11 peut être placé dans une rainure pouvant s'adapter à chaque véhicule.

Le capotage de protection 10 est monté sur le support de compresseur par deux points de fixation par vissage, de référence 12 et 13 (les vis de fixation ne sont pas représentées).

Les moyens de positionnement et de fixation du capotage de protection 10 comportent, de plus, un point de fixation par un goujon du bac à huile 3, et un point d'appui 15 (figure 2) sur une vis 4A du carter de distribution 4. Cette vis 4A du carter de distribution 4 présente, de préférence, une interface amortissante, de type caoutchouc, montée sur le carter de distribution 4.

Le dispositif de protection décrit ci-dessus présente de nombreux avantages, parmi lesquels les avantages suivants :
- il permet de renforcer, de manière importante, la sécurité de fonctionnement du véhicule en protégeant la courroie d'entraînement des accessoires des projections d'eau ou de gravillons susceptibles d'empêcher le redémarrage du moteur du véhicule par l'alterno-démarreur,
- il permet de pallier les problèmes de passage d'eau par les passages de roue du véhicule,
- il est économique, notamment en ce qu'il ne nécessite pas de modifications importantes sur les pièces existantes des façades accessoires et organes mécaniques,
- il est adaptable aux différents modèles de véhicules, le nombre et la position des ailerons pouvant être adaptés selon le modèle et/ou les zones à protéger du véhicule.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

## Revendications

1. Véhicule automobile, du type comportant
- un système « Stop & Start » par alterno-démarreur,
- un dispositif de protection de la façade accessoires,
ledit dispositif étant constitué par un capotage de protection (10) monté, par l'intermédiaire de moyens de positionnement et de fixation, sur un support solidaire du moteur, ledit capotage de protection (10) permettant de limiter les projections d'eau ou de gravillons sur différents accessoires, tels que la courroie (1) de l'alterno-démarreur, les tendeurs et les poulies d'alternateur, de compresseur et de vilebrequin, **caractérisé en ce qu'**il est prévu au moins un aileron (11) sur le capotage de protection (10), qui est disposé dans la partie dudit capotage de protection (10) tournée vers l'avant du véhicule et qui fait saillie vers le haut et vers l'avant, de façon à renforcer la protection en cas de projection d'eau ou de gravillons.

2. Véhicule selon la revendication 1, **caractérisé en ce que** ledit aileron (11) au moins est « monobloc » avec le capotage de protection (10).

3. Véhicule selon la revendication 1, **caractérisé en ce que** ledit aileron (11) au moins est monté sur le capotage de protection (10) par liaison par vissage.

4. Véhicule selon la revendication 1, **caractérisé en ce que** ledit aileron (11) au moins est monté sur le capotage de protection (10) par liaison par clippage.

5. Véhicule selon la revendication 1, **caractérisé en ce que** ledit aileron (11) au moins est placé dans une rainure pouvant s'adapter à chaque véhicule.

6. Véhicule selon la revendication 1, **caractérisé en ce que** les moyens de positionnement et de fixation du capotage de protection (10) sur ledit support solidaire de la caisse du véhicule comportent deux points de fixation par vissage.

7. Véhicule selon l'une quelconque des revendications 1 et 6, **caractérisé en ce que** le support solidaire du véhicule, sur lequel est monté le capotage de protection (10), est le support de compresseur.

8. Véhicule selon la revendication 6, **caractérisé en ce que** lesdits moyens de positionnement et de fixation du capotage de protection (10) comportent, de plus, un point de fixation par un goujon du bac à huile (3).

9. Véhicule selon l'une quelconque des revendications 6 à 8, **caractérisé en ce que** lesdits moyens de positionnement et de fixation du capotage de protection (10) comportent, de plus, un point d'appui du capotage (10) sur une vis (4A) du carter de distribution (4).

10. Véhicule selon la revendication 9, **caractérisé en ce que** ledit appui sur une vis (4A) du carter de distribution (4) présente une interface amortissante, de type caoutchouc, montée sur ledit carter de distribution (4).

## Patentansprüche

1. Motorfahrzeug des Typs, der
- ein "Stopp- und Start"-System durch Startergenerator,
- eine Schutzvorrichtung der freiliegenden Flächen von Zubehörteilen
umfasst, wobei die Vorrichtung aus einer Schutzverkleidung (10) besteht, die über Positionierungs- und Befestigungsmittel auf einem Träger, der fest mit dem Motor verbunden ist, montiert ist, wobei es die Schutzverkleidung (10) erlaubt, Wasser- oder Kiesspritzer auf unterschiedlichen Zubehörteilen einzuschränken, wie zum Beispiel auf den Riemen (1) des Startergenerators, den Spannern und Scheiben der Lichtmaschine, dem Verdichter und der Kurbelwelle, **dadurch gekennzeichnet, dass** mindestens ein Flügel (11) auf der Schutzverkleidung (10) vorgesehen ist, der in dem Teil der Schutzverkleidung (10), der zu der Vorderseite des Fahrzeugs gewandt ist, angeordnet ist, und der nach oben und nach vorn derart vorragt, dass der Schutz im Fall von Wasser- oder Kiesspritzern verstärkt ist.

2. Fahrzeug nach Anspruch 1, **dadurch gekennzeichnet, dass** der Flügel (11) mindestens mit der Schutzverkleidung (10) "einstückig" ist.

3. Fahrzeug nach Anspruch 1, **dadurch gekennzeichnet, dass** der mindestens eine Flügel (11) auf die Schutzverkleidung (10) durch Schraubverbindung montiert ist.

4. Fahrzeug nach Anspruch 1, **dadurch gekennzeichnet, dass** der mindestens eine Flügel (11) auf die Schutzverkleidung (10) durch Clipsverbindung montiert ist.

5. Fahrzeug nach Anspruch 1, **dadurch gekennzeichnet, dass** der mindestens eine Flügel (11) in einer Rille, die sich an jedes Fahrzeug anpassen kann, platziert ist.

6. Fahrzeug nach Anspruch 1, **dadurch gekennzeichnet, dass** die Positionierungs- und Befestigungsmittel der Schutzverkleidung (10) auf dem Träger, der fest mit der Karosserie des Fahrzeugs verbunden ist, zwei Schraubbefestigungsstellen umfassen.

7. Fahrzeug nach einem der Ansprüche 1 und 6, **dadurch gekennzeichnet, dass** der Träger, der fest mit dem Fahrzeug verbunden ist, auf dem die Schutzverkleidung (10) montiert ist, der Verdichterträger ist.

8. Fahrzeug nach Anspruch 6, **dadurch gekennzeichnet, dass** die Positionierungs- und Befestigungsmittel der Schutzverkleidung (10) außerdem eine Befestigungsstelle durch einen Stift der Ölwanne (3) umfassen.

9. Fahrzeug nach einem der Ansprüche 6 bis 8, **dadurch gekennzeichnet, dass** die Positionierungs- und Befestigungsmittel der Schutzverkleidung (10) außerdem eine Auflagestelle der Verkleidung (10) auf einer Schraube (4A) des Ventilsteuerungsgehäuses (4) umfassen.

10. Fahrzeug nach Anspruch 9, **dadurch gekennzeichnet, dass** die Auflage auf einer Schraube (4A) des Ventilsteuerungsgehäuses (4) eine dämpfende Schnittfläche des Typs Kautschuk, die auf das Ventilsteuerungsgehäuse (4) montiert ist, umfasst.

## Claims

1. A motor vehicle, of the type comprising
- an alternator-starter-type "stop & start" system,
- a device for protecting the exposed face of accessories, said device being constituted by a protective casing (10) mounted, via positioning and fixing means, on a support integral with the engine, said protective casing (10) permitting the limiting of projections of water or chippings on various accessories, such as the alternator-starter belt (1), the tensioners and the pulleys of the alternator, compressor and crankshaft,
**characterized in that** at least one fin (11) is provided on the protective casing (10), which is disposed in the part of said protective casing (10) turned toward the front of the vehicle and which projects upwards and toward the front, so as to reinforce the protection in the case of the projection of water or chippings.

2. The vehicle according to Claim 1, **characterized in that** said fin (11) at least is "in one piece" with the protective casing (10).

3. The vehicle according to Claim 1, **characterized in that** said fin (11) at least is mounted on the protective casing (10) by a screwed connection.

4. The vehicle according to Claim 1, **characterized in that** said fin (11) at least is mounted on the protective casing (10) by clipped connection.

5. The vehicle according to Claim 1, **characterized in that** said fin (11) at least is placed in a groove, able to be adapted to each vehicle.

6. The vehicle according to Claim 1, **characterized in that** the positioning and fixing means of the protective casing (10) on said support integral with the body of the vehicle comprise two points for attachment by screwing.

7. The vehicle according to any one of Claims 1 and 6, **characterized in that** the support integral with the vehicle, on which the protective casing (10) is mounted, is the compressor support.

8. The vehicle according to Claim 6, **characterized in that** said positioning and fixing means of the protective casing (10) comprise, in addition, an attachment point by a pin of the oil pan (3).

9. The vehicle according to any one of Claims 6 to 8, **characterized in that** said positioning and fixing means of the protective casing (10) comprise, in addition, a support point of the casing (10) on a screw (4A) of the timing case (4).

10. The vehicle according to Claim 9, **characterized in that** said support on a screw (4A) of the timing case (4) has a damping interface, of rubber type, mounted on said timing case (4).
